(19) Europäisches Patentamt
European Patent Office
Office européen des brevets

(11) **EP 2 799 296 A1**

(12) **EUROPEAN PATENT APPLICATION**

(43) Date of publication:
**05.11.2014 Bulletin 2014/45**

(51) Int Cl.:
***B60T 7/22*** *(2006.01)*

(21) Application number: **14165673.6**

(22) Date of filing: **23.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.04.2013 GB 201307308**

(71) Applicant: **Haldex Brake Products Limited Lindley, Warwickshire CV13 6DE (GB)**

(72) Inventor: **The designation of the inventor has not yet been filed**

(74) Representative: **Lawson, Alison Christina Forresters Skygarden Erika-Mann-Strasse 11 80636 München (DE)**

(54) **A method of, and apparatus for, controlling the speed of a vehicle**

(57)    A method of operating a vehicle wherein the method comprises:-
using a distance sensor to determine the distance between a part of the vehicle and an object, and
implementing a speed control procedure if the distance detected by the distance sensor falls below a first predetermined value,
characterised in that the method further includes the step of operating at least one vehicle brake momentarily to apply a low level braking force pulse to the vehicle following the engagement of a reverse gear of the vehicle.

Figure 1

**Description**

Description of Invention

This invention relates to a method of, and apparatus for, controlling the speed of a vehicle. More particularly, but not exclusively, this invention relates to a method of controlling a vehicle when the vehicle is reversing, e.g. a controlled docking system.

It is often required for a vehicle to be manoeuvred into a position near one or more objects. For example, it is common for a truck or the like to be required to be reversed into a loading/unloading bay. Often, it is very difficult for a driver of the vehicle to determine how far a rear end of the vehicle is positioned from the loading bay and thus frequently, the vehicle collides with the loading/unloading bay through an error in judgement by the driver. Such collisions often cause serious damage to the loading/unloading bay and/or to the rear of the vehicle.

In an effort to avoid this problem, it has been proposed to provide the rear of the vehicle with a distance sensor which senses a distance between a rearmost part of the vehicle and the closest object near the rear of the vehicle, and to use the distance determined by the distance sensor automatically to reduce the speed of the vehicle to ensure that the vehicle does not collide with the object.

Such a system is disclosed in US6604592. In this prior art system, when the vehicle is placed in reverse mode, sensed distance values from the distance sensor are sent to a controller, and the controller limits the speed of the vehicle to a maximum permissible vehicle speed value which depends on the distance value detected by the distance sensor. If the distance value is greater than a first amount, the maximum permissible vehicle speed is set to a first value, if the distance value is less than the first amount by greater than a second amount, the maximum permissible vehicle speed is set to a second value, and if the distance value is less than the second amount, the vehicle speed is controlled such that the vehicle comes to a stop before contacting the object.

Examples of similar prior art systems are also disclosed in US 3, 898,652, US 4,574, 908, and GB 2458655.

According to a first aspect of the invention we provide a method of controlling a vehicle wherein the method comprises:-

using a distance sensor to determine the distance between a part of the vehicle and an object, and

implementing a speed control procedure if the distance detected by the distance sensor falls below a first predetermined value,

characterised in that the method further includes the step of operating at least one vehicle brake momentarily to apply a low level braking force pulse to the vehicle following the engagement of a reverse gear of the vehicle.

The method may further include the steps of operating at least one vehicle brake momentarily to apply a plurality of low level braking force pulses to the vehicle following the engagement of a reverse gear of the vehicle.

The step of operating at least one vehicle brake momentarily to apply a low level braking force pulse or plurality of low level braking force pulses to the vehicle may be carried out when the speed of the vehicle reaches a predetermined level after engagement of the reverse gear.

The method may further include the steps of operating at least one vehicle brake momentarily to apply a low level braking force pulse to the vehicle when the distance detected by the distance sensor falls below a second predetermined value, the second predetermined value being greater than the first predetermined value.

The method may further include the step of operating at least one vehicle brake momentarily to apply a plurality of low level braking force pulses to the vehicle when the distance detected by the distance sensor falls below a second predetermined value, the second predetermined value being greater than the first predetermined value.

The braking force applied during each low level braking force pulse referred to above is preferably not sufficient to bring the vehicle to a stop. It may be determined using information relating to the speed of the vehicle and / or the weight / loading of the vehicle.

The speed control procedure may comprise obtaining from a wheel speed sensor an output signal indicative of a rotational speed of the wheel; and using the rotational speed of the wheel and the output signal from the load sensor to calculate a braking force required to bring the vehicle to a stop when the vehicle has travelled a predetermined proportion of the predetermined distance value, and ensuring that the calculated braking force is applied to the vehicle.

The speed control procedure may include, if an operator is already causing a braking force to be applied to one or more wheels of the vehicle, determining whether the applied braking force is sufficient to reduce the speed of the vehicle so that the vehicle does not collide with the object, and if the braking force already being applied is not sufficient, applying additional braking force to one or more wheels of the vehicle to bring the braking force up to the calculated braking force.

If the rotational speed of the wheel is such that if no meaningful indication of the rotational speed thereof can be provided by the wheel speed sensor, the speed control procedure includes applying a predetermined level of braking force to one or more wheels of the vehicle.

The braking force to be applied by the braking device during the speed control procedure may be calculated to bring the vehicle to rest at a predetermined minimum distance away from the object.

According to a second aspect of the invention we provide a control apparatus for controlling a vehicle having a reverse gear, the apparatus including a distance sensor which when supplied with electrical power determines the distance between itself and an object, and which is connected to a controller, the controller being programmed to implement a speed control procedure if the distance detected by the distance sensor falls below a first predetermined value, wherein the controller is programmed to operate at least one vehicle brake momentarily to apply a low level braking force pulse to the vehicle following the engagement of a reverse gear of the vehicle.

The controller may be programmed to operate at least one vehicle brake momentarily to apply a plurality of low level braking force pulses to the vehicle following the engagement of a reverse gear of the vehicle.

The controller may be programmed to operate at least one vehicle brake momentarily to apply a low level braking force pulse to the vehicle when the distance detected by the distance sensor falls below a second predetermined value, the second predetermined value being greater than the first predetermined value.

The controller may be programmed to operate at least one vehicle brake momentarily to apply a plurality of low level braking force pulses to the vehicle when the distance detected by the distance sensor falls below a second predetermined value, the second predetermined value being greater than the first predetermined value.

The control apparatus may further include a wheel speed sensor mountable on or near a wheel of the vehicle for sensing a rotational speed of the wheel, the wheel speed sensor being connected to the controller so it can provide the controller with an output signal indicative of the sensed rotational speed of the wheel, wherein the controller is programmed to use the output signal from the wheel speed sensor to operate at least one vehicle brake momentarily to apply a low level braking force pulse or plurality of low level braking force pulses to the vehicle when the speed of the vehicle reaches a predetermined level after engagement of the reverse gear.

The control apparatus may further include a wheel speed sensor mountable on or near a wheel of the vehicle for sensing a rotational speed of the wheel, the wheel speed sensor being connected to the controller so it can provide the controller with an output signal indicative of the sensed rotational speed of the wheel, a load sensor for sensing any additional load supported by the vehicle, the load sensor being connected to the controller so that it can provide the controller with an output signal indicative of the load. In this case, the controller may be programmed such that the speed control procedure comprises using the output signal from the wheel speed sensor and the output signal from the load sensor to calculate the braking force required to bring the vehicle to a stop within a predetermined distance from the object and transmitting a signal to a braking device so as to ensure that the braking device applies the calculated braking force to one or more wheels of the vehicle.

Examples of the invention will now be described by way of example only with reference to the accompanying drawings, of which:

Figure 1 is a schematic view of the components required or carrying out the method of the present invention,

Figure 2 is a flow diagram illustrating steps of the method of one embodiment of the present invention,

Figure 3 is a flow diagram illustrating steps of the method of an alternative embodiment of the present invention,

Figure 4 is a flow diagram illustrating steps in a speed control procedure suitable for use in the present invention,

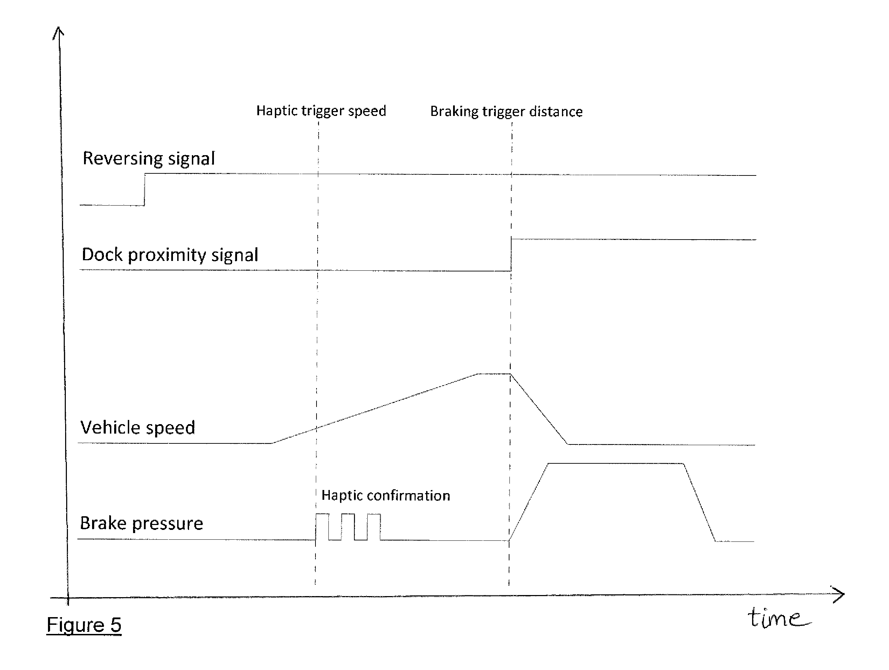

Figure 5 is a illustration of the changes in various parameters in a system operated in accordance with the method illustrated in Figures 2 or 3 over time, and

Figure 6 is a flow diagram illustrating steps of the method of a further alternative embodiment of the present invention.

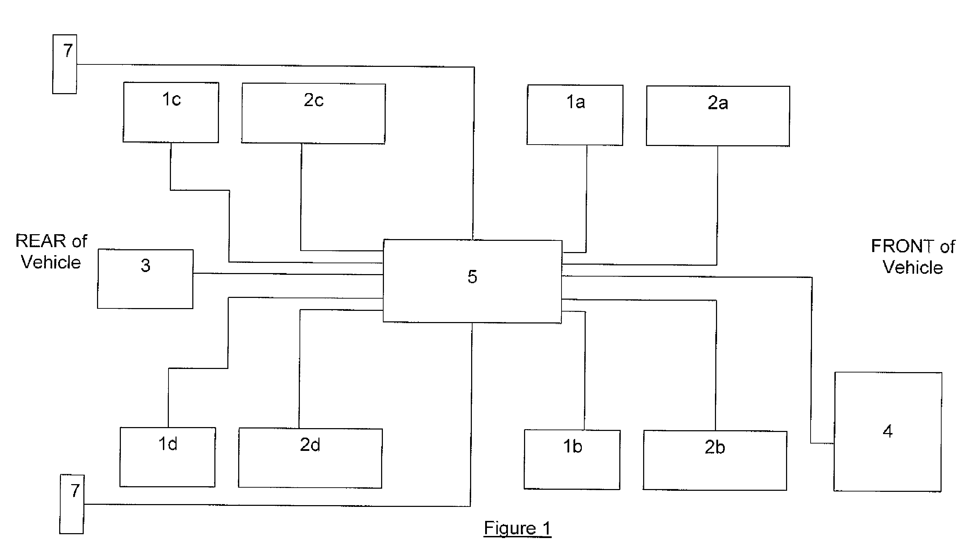

Referring firstly to figure 1, this shows a schematic layout of the apparatus required to be installed on a vehicle so that the method of the present invention can be performed. The apparatus can be applied to the trailer of an articulated lorry, i.e. a lorry which has a tractor and a towed trailer which itself has two or more wheels, a non-articulated vehicle, or on both the tractor and trailer of an articulated vehicle.

The two front wheels of the vehicle and the two rearmost wheels of the vehicle are provided with braking devices 1a to 1d of known kind, e.g. a pneumatically or hydraulically operated brake, the operation of which is controlled by an electronic controller 5. The controller 5 may be an electronic control unit for an electronic braking system (EBS).

Of course, if the vehicle has other wheels, these can, if desired, be provided with respective braking devices.

Each braking device 1a to 1d is operable to apply braking force to its respective wheel to slow that wheel. Braking of the vehicle can, as is normal in conventional vehicles fitted with EBS, be initiated by the driver by actuation of a brake pedal or lever 4 positioned in the driver's cab, operation of the brake pedal or lever 4 causing the braking devices 1a to 1d to be actuated so as to cause a braking force to be applied to one or more wheels of the vehicle to slow the vehicle.

Each wheel is also provided with a wheel speed sensor 2a to 2d, which is configured to sense a rotational speed of its respective wheel and to provide an output indicative of the sensed rotational speed to the controller 5. Such wheel sensors are preferably those provided as part of conventional EBS with anti-lock braking control.

Although in the present example each wheel is provided with a respective wheel speed sensor 2a to 2d, it is not necessary for each wheel to have a wheel speed sensor. Indeed the method of the present invention could work adequately with a wheel speed sensor provided on only one wheel.

Mounted on the vehicle, in this example at a rear end thereof, is a distance sensor 3, e.g. an ultrasonic distance sensor or any other appropriate sensor. The distance sensor is configured to sense when a rearmost part of the vehicle is within a predetermined distance of an object, e.g. a loading/unloading bay, and is connected to the controller 5, thus enabling it to provide an output signal to the controller 5 when the object is within the predetermined distance of the rear of the vehicle. The distance sensor 3 is preferably powered using the same electrical power supply as the vehicle's electronic braking system, the controller 5 being operable to control supply of power to the distance sensor 3.

Where the vehicle is an articulated lorry, the distance sensor 3 is preferably positioned towards a rearmost end of the trailer and is configured to sense when a rearmost part of the trailer is within a predetermined distance of the loading/unloading bay.

The vehicle is also provided with, in this example two, reversing lights 7c, 7d, i.e. lights which are powered to light up when the vehicle's reverse gear is engaged, as is conventional. The reversing lights are electrically connected to controller 5, so that an input signal can be transmitted to the controller 5 when the reversing lights 7c, 7d are on. Thus, the controller 5 can use this input signal to determine whether or not the vehicle's reverse gear is engaged.

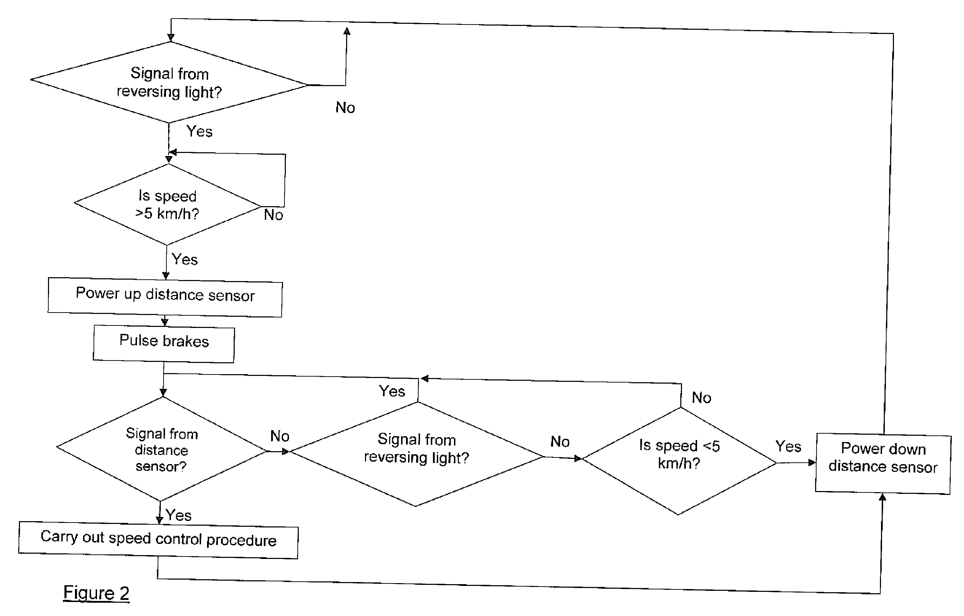

Turning now to the flow diagram of figure 2, when the controller 5 receives an input signal from the reversing lights 7c, 7d, because the vehicle is reversing, for example into a loading/unloading bay, the controller 5 starts to monitor the speed of the vehicle. The controller 5 may obtain from one or more of the wheel speed sensors 2a to 2d an indication of the rotational speed of the or each wheel, and use this information to calculate the vehicle speed. When the vehicle speed exceeds a predetermined level (in this example 5 km/h), the controller 5 powers up the distance sensor 3 at the rear of the trailer. The controlled docking system is now active.

In order to alert the driver to the fact that the controlled docking system is now active, the controller 5 is also programmed to pulse the brakes of the vehicle, i.e. to apply the vehicle brakes, for a brief moment (less than 0.5 seconds, for example) before releasing the brakes and allowing the vehicle to reverse unbraked. The brakes may be pulsed once or more than once. In this embodiment of the invention, the brakes are pulsed three times in quick succession.

This pulsing of the vehicle brakes provides the driver with a "haptic" confirmation that the controlled docking system is active.

The controller 5 is programmed, when pulsing the brakes in this way, to apply a relatively low level braking force that does not bring the vehicle to a sudden stop, but which is sufficiently high to be noticeable to the driver. This level could be set at a predetermined value, or could be set by the controller 5 at a level depending on the speed or deceleration of the vehicle, which may, for example, be derived by the controller 5 from the signal received from the or each wheel speed sensor. Alternatively, or additionally, if the vehicle includes a vehicle load sensor which is connected to the controller 5 to provide the controller 5 with a signal indicative of the loading of the vehicle, the braking pulse level may be set by the controller 5 at a level which depends on the loading of the vehicle. The load sensor could, for example, comprise a pressure transducer which measures the pressure in the vehicle's suspension system, as is well known in the art.

Preferably, the level of the braking force applied during the pulses is set that each causes the vehicle to decelerate by no more than around 1 $m/s^2$.

The distance sensor 3 checks, either constantly, or intermittently, the distance between a rearmost part of the vehicle and an outermost projecting part of the loading/unloading bay. Where the distance sensor 3 is programmed to carry out this check intermittently, it must do this sufficiently frequently, say every 0.1 seconds, that there is no real risk of the vehicle colliding with the loading / unloading bay, before the distance sensor 3 detects that the object is within the predetermined range. In this example the predetermined distance is 1 metre.

The controller 5 also monitors for receipt of a signal from the reversing lights 7c, 7d, and if this signal ceases, because the driver has disengaged the reverse gear, the controller 5 carries out a check to establish if the speed of the vehicle is greater than a pre-determined value. Again, to do this, the controller 5 may obtain from one or more of the wheel speed sensors 2a to 2d an indication of the rotational speed of the or each wheel, and use this information to calculate the vehicle speed.

Whilst the speed of the vehicle is greater than the predetermined value, the controller continues to monitor for receipt of a signal from the distance sensor 3. If, on the other hand, the speed of the vehicle falls to less than the predetermined value, in this example 5 km / hr, the controller 5 switches off the power supply to the distance sensor 3. The process can then start again next time reverse gear is engaged.

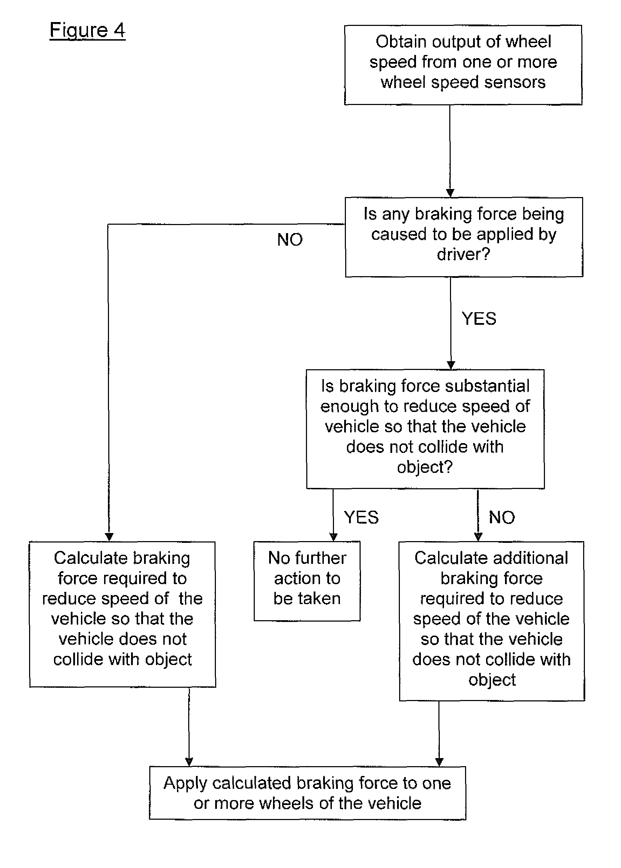

If the rearmost part of the vehicle moves to within the predetermined distance of the loading/unloading bay the distance sensor 3 sends a signal to the controller 5. The controller 5 then initiates a speed control procedure one example of which is illustrated schematically in Figure 4, and described in more detail below. After the speed control procedure is complete, the controller 5 switches off power to the distance sensor 3.

In an alternative embodiment of the invention, instead of considering the vehicle speed, the controller 5 may simply be programmed to switch off the power supply to the distance sensor 3 a predetermined time (say 60 seconds) after it detects that it is no longer receiving a signal from the reversing lights 7c, 7d.

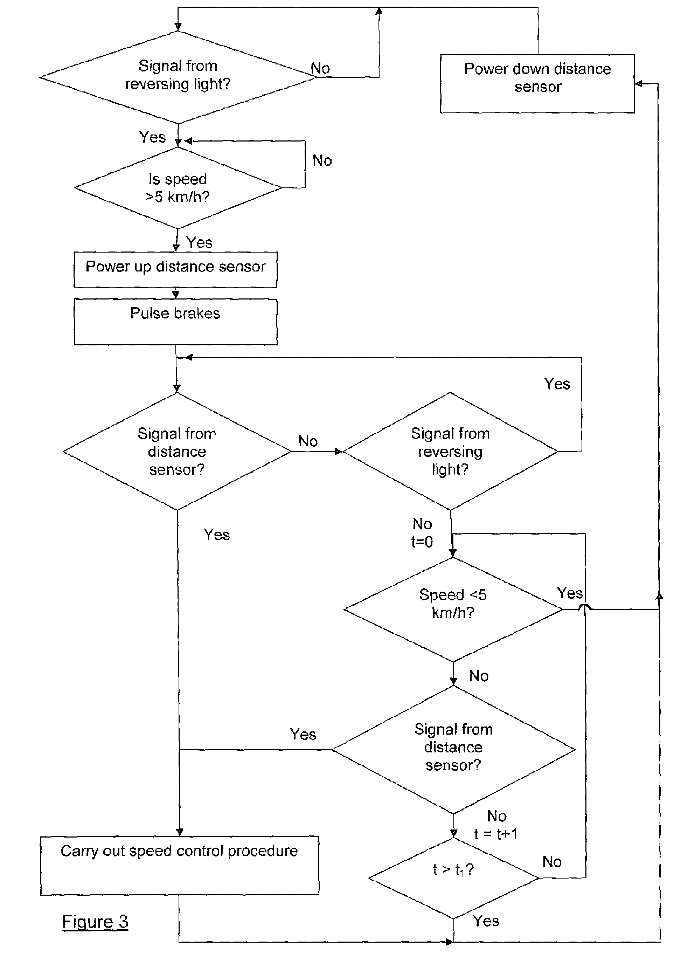

In a further alternative embodiment of the invention, the controller 5 may be programmed to switch off the power supply to the distance sensor 3 when the speed of the vehicle falls below a predetermined level (5 km/h say) or after a predetermined period of time (say 60 seconds) from the time at which it detect that it is no longer receiving a signal from the reversing lights 7c, 7d, whichever happens soonest. A flow chart showing how the controller 5 may operate to implement this embodiment of the invention is illustrated in Figure 3.

Clearly, it would not desirable for the speed control procedure to be implemented when the vehicle is being driven forwards away from an object close to its rear end. The system is therefore configured such that implementation of the speed control procedure is linked to the engagement of the vehicle's reverse gear. It will be appreciated, however, that, unlike in the prior art systems, the speed control procedure can be initiated for a period of time _after_ the reverse gear has been disengaged. This prevents a driver from avoiding initiation of the speed control procedure by reversing towards a loading / unloading bay at a reasonable speed, disengaging the reverse gear just before the vehicle is within the predetermined distance from the loading / unloading bay, and allowing the vehicle to coast into the loading / unloading bay in neutral, until it comes to a stop naturally, perhaps by bumping into the loading / unloading bay.

In this embodiment of the invention, this is achieved by the controller 5 controlling the supply of electrical power to the distance sensor 3. The distance sensor 3 is only powered to monitor the distance between the rear of the vehicle and the nearest object when the reverse gear is engaged or immediately after disengagement of the reverse gear as discussed above. It should be appreciated, however, that this need not been the case, and the distance sensor 3 could be active at all times whilst the vehicle engine is running, for example. In this case, the controller 5 would be programmed to implement the speed control procedure when in receipt of a signal from the distance sensor 3 indicating that the rear of the vehicle is less than the predetermined distance from the nearest object, only whilst when the reverse gear is engaged or immediately after disengagement of the reverse gear as discussed above.

Moreover, whilst in this embodiment of the invention, the distance sensor 3 sends a signal to the controller 5 only when the rear of the vehicle is less than the predetermined distance from the nearest object, the distance sensor 3 could send a distance signal to the controller 5 at regular intervals, with the controller 5 making the determination as to whether the rear of the vehicle is less than the predetermined distance from the nearest object.

When the controller 5 receives a signal from the distance sensor 3 indicating that the rearmost part of the vehicle is within the predetermined distance of the loading/unloading bay, the controller 5 obtains from one or more of the wheel speed sensors 2a to 2d an indication of the rotational speed of the or each wheel. It then determines what, if any, braking force is required to be applied by the braking devices 1a to 1d to the wheels of the vehicle so as to slow the vehicle so that the rearmost part of the vehicle does not collide with the loading/unloading bay.

The required braking force may be calculated as follows:

The data known to the controller 5, at the instant in time when the rear of the vehicle moves within 1 metre of the loading/unloading bay, is:

 1. Vehicle speed - calculated from the rotation wheel speed measurement;

 2. Distance to collision with loading/unloading bay - 1 metre; and

 3. Brake performance, i.e. braking force required to produce a desired retardation of the vehicle.

It is known that the following equation of motion of a moving body is true:-

$$V^2 = U^2 + 2AS \tag{1}$$

where, S = distance (m)

 U= initial speed (ms$^{-1}$)

V= final speed (ms$^{-1}$)

A = acceleration (ms$^{-2}$)

Rearranging this equation gives:

$$A = \frac{V^2 - U^2}{2S}$$

In order to calculate the deceleration required to stop the vehicle before it collides with the loading/unloading bay, it will be appreciated that the final velocity V is zero, U is the speed signal derived from the wheel speed sensors, and S is the required stopping distance. When, as in this example, the distance sensor 3 is configured to send a signal to the controller 5 when the vehicle is 1 m from the object, the desired stopping distance may be 0.8m, for example. There will be a known time delay ($T_d$) in the brakes being applied to the wheels, so this should also be taken into account. Thus the actual stopping distance will be (S - U.$T_d$).
Given the zero value of V, rearranging equation (1) to find A gives:-

$$A = \frac{-U^2}{2(S - UT_d)} \tag{2}$$

It is then necessary to calculate the brake pressure required to produce this deceleration, but as the system could be fitted to many different types of vehicle carrying different loads, in order to keep the system as simple as possible, as estimate is made as to the braking force required as follows:
For a fully laden tractor/trailer combination the approximate relationship between the deceleration and brake pressure is known and may be programmed into the controller. For example, in many cases, to achieve a deceleration of 0.1 g, approximately 1 bar of air pressure is required to be applied to the brake actuators. So, the brake pressure P required to achieve a deceleration of magnitude A can be estimated to be:

$$P = 10.A/g \tag{3}$$

Combining equations (2) and (3) and solving for P gives:-

$$P = \frac{10.U^2.K_f}{2.g(S - UT_d)} \tag{4}$$

where, $K_f$ = Trailer braking factor
The trailer braking factor, $K_f$, is used to compensate for the fact that the braking force is applied to the trailer brakes only, and not to the tractor. Where the vehicle includes a vehicle load sensor to provide an indication of the loading of the vehicle, the vehicle load sensor output may be used to calculate the reduction in braking pressure required to compensate for loads of less than 100% of the full vehicle capacity. In this case, $K_f$ is dependent on the weight of the trailer, i.e. whether or not the trailer is empty, as full trailer will require a larger braking force than an empty trailer. To do this, one or more load sensors may be provided on the trailer, or at the connection of the trailer to the towing part of the vehicle, so that measurements from the(se) sensor(s) is/are sent to the controller 5, so that the controller 5 can make a more accurate determine of the value of $K_f$.
For the example above, where the predetermined distance to the loading/unloading bay is 1 metre, the controller 5 will calculate, using equation (4) above, the required braking force which is required to be applied to the wheels and will send an appropriate signal to each braking device 1a to 1d to effect the desired operation thereof.
If a driver of the vehicle is already causing a braking force to be applied to the wheels of the vehicle, by actuation of the brake pedal or lever 4, the controller 5 will take this into account when calculating the required braking force. If the braking force already being applied by the driver is not sufficient enough, i.e. is not equal to or greater than the calculated brake pressure value, P, from equation (4), the controller 5 will send a signal to each of the braking devices 1a to 1d to effect an increase in the braking force being applied thereby to the calculated braking force. Of course, if the braking force already being applied by the driver is greater than the brake pressure value, P, calculated by the controller 5, no additional braking will be applied to the wheels.

It should be appreciated, however, that the invention is not restricted to use with this example of speed control procedure, and other procedures, such as the ones described in US 6, 604, 592, US 3, 898, 652 or US 4, 574, 908 could equally be used.

Providing the driver with the "haptic" confirmation that the controlled docking system is active may be advantageous if not all the vehicles in a fleet are equipped with such a system. If a driver is used to driving vehicles with a controlled docking system, he may come to rely on it to avoiding reversing into a loading/unloading bay, and may become less than cautious when reversing. As a result, if the driver is not used to receiving a haptic confirmation that the controlled docking system is active, if this driver then drives a vehicle without the controlled docking system he may be more likely damage the vehicle when reversing. When the haptic confirmation is provided, the driver is more likely to remember / realise that he is driving a vehicle without the controlled docking system.

The controller 5 may also be programmed to pulse the vehicle brakes for a second time, for example, when the distance sensor 3 detects that the rear of the vehicle is within a predetermined distance from an object such as a loading/unloading bay. Preferably this predetermined distance is greater than the distance at which the controller 5 is programmed to carry out the speed control procedure, and, as such, acts as a warning for the driver that initiation of the speed control procedure is imminent. This "haptic" warning could be provided in addition to or instead of a visual warning provided by, for example, a flashing light on the dashboard or on the exterior of the vehicle.

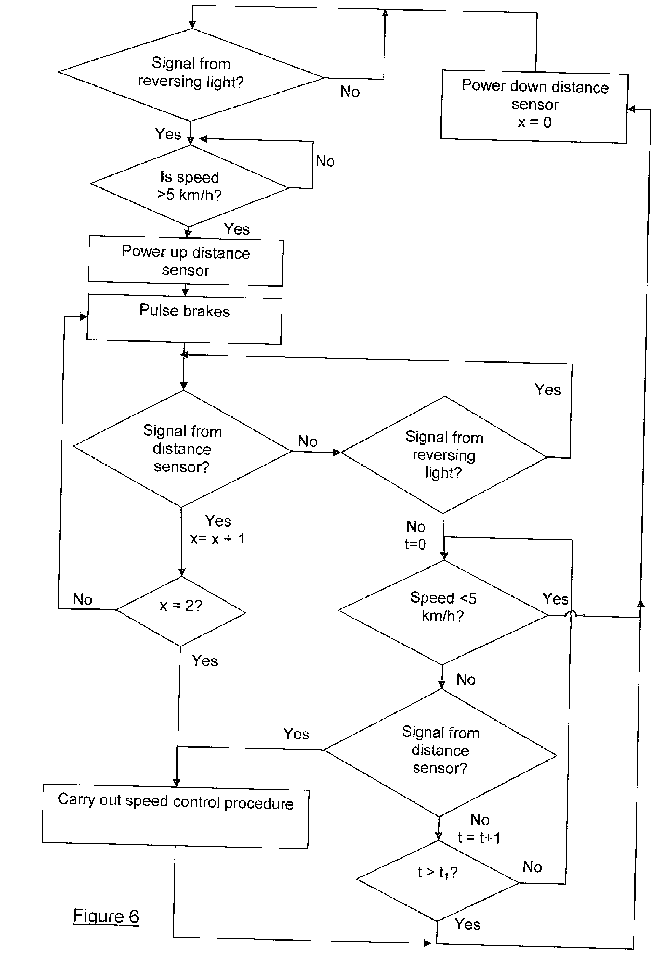

One way of implementing this in the system described in relation to Figure 3 is illustrated in Figure 6. It could also be implemented in the system described in relation to Figure 2 in an analogous manner.

The distance sensor 3 is programmed to send a signal to the controller 5 when the rear of the vehicle is a first distance (in this example 3m) away from the nearest object, and when it is a second distance (in this example 1 m) away from the nearest object. When the first signal is received from the distance sensor 3, the brakes are pulsed, and when the second signal is received, the speed control procedure is implemented.

Of course, as before, the distance sensor 3 could send a distance signal to the controller 5 at regular intervals, with the controller 5 making the determination as to whether the rear of the vehicle is at the first or second predetermined distance from the nearest object.

It should be appreciated that, in the examples of the invention described above, the distance sensor is powered up after the vehicle speed reaches the predetermined level. This need not be the case, however, and the distance sensor may, instead, be powered up as soon as the reverse gear is engaged, or after the brakes are pulsed for the first time.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

**Claims**

1. A method of operating a vehicle wherein the method comprises:-

   using a distance sensor to determine the distance between a part of the vehicle and an object, and
   implementing a speed control procedure if the distance detected by the distance sensor falls below a first predetermined value,
   **characterised in that** the method further includes the step of operating at least one vehicle brake momentarily to apply a low level braking force pulse to the vehicle following the engagement of a reverse gear of the vehicle.

2. A method of operating a vehicle according to claim 1 wherein the method further includes the steps of operating at least one vehicle brake momentarily to apply a plurality of low level braking force pulses to the vehicle following the engagement of a reverse gear of the vehicle.

3. A method of operating a vehicle according to claim 1 or 2 wherein the step of operating at least one vehicle brake momentarily to apply a low level braking force pulse or plurality of low level braking force pulses to the vehicle is carried out when the speed of the vehicle reaches a predetermined level after engagement of the reverse gear.

4. A method of operating a vehicle according to any preceding claim wherein the method further includes the steps of operating at least one vehicle brake momentarily to apply a low level braking force pulse to the vehicle when the distance detected by the distance sensor falls below a second predetermined value, the second predetermined value being greater than the first predetermined value.

5. A method of operating a vehicle according to any preceding claim wherein the method further includes the steps of operating at least one vehicle brake momentarily to apply a plurality of low level braking force pulses to the vehicle when the distance detected by the distance sensor falls below a second predetermined value, the second predetermined value being greater than the first predetermined value.

6. A method of operating a vehicle according to any preceding claim wherein the speed control procedure comprises obtaining from a wheel speed sensor an output signal indicative of a rotational speed of the wheel; and using the rotational speed of the wheel and the output signal from the load sensor to calculate a braking force required to bring the vehicle to a stop when the vehicle has travelled a predetermined proportion of the predetermined distance value, and ensuring that the calculated braking force is applied to the vehicle during the speed control procedure.

7. A method of operating a vehicle according to claim 6 wherein the speed control procedure includes, if an operator is already causing a braking force to be applied to one or more wheels of the vehicle, determining whether the applied braking force is sufficient to reduce the speed of the vehicle so that the vehicle does not collide with the object, and if the braking force already being applied is not sufficient, applying additional braking force to one or more wheels of the vehicle to bring the braking force applied during the speed control procedure up to the calculated braking force.

8. A method of operating a vehicle according to claim 6 or 7 wherein if the rotational speed of the wheel is such that if no meaningful indication of the rotational speed thereof can be provided by the wheel speed sensor, the speed control procedure includes applying a predetermined level of braking force to one or more wheels of the vehicle.

9. A method of operating a vehicle according to any one of claims 6 to 8 wherein the braking force to be applied by the braking device during the speed control procedure is calculated to bring the vehicle to rest at a predetermined minimum distance away from the object.

10. A control apparatus for controlling a vehicle having a reverse gear, the apparatus including a distance sensor which when supplied with electrical power determines the distance between itself and an object, and which is connected to a controller, the controller being programmed to implement a speed control procedure if the distance detected by the distance sensor falls below a first predetermined value, wherein the controller is programmed to operate at least one vehicle brake momentarily to apply a low level braking force pulse to the vehicle following the engagement of a reverse gear of the vehicle.

11. A control apparatus according to claim 10 wherein the controller is programmed to operate at least one vehicle brake momentarily to apply a plurality of low level braking force pulses to the vehicle following the engagement of a reverse gear of the vehicle.

12. A control apparatus according to claim 10 or 11 wherein the controller is programmed to operate at least one vehicle brake momentarily to apply a low level braking force pulse to the vehicle when the distance detected by the distance sensor falls below a second predetermined value, the second predetermined value being greater than the first predetermined value.

13. A control apparatus according to claim 10 or 11 wherein the controller is programmed to operate at least one vehicle brake momentarily to apply a plurality of low level braking force pulses to the vehicle when the distance detected by the distance sensor falls below a second predetermined value, the second predetermined value being greater than the first predetermined value.

14. A control apparatus according to any one of claims 10 to 13 further including a wheel speed sensor mountable on or near a wheel of the vehicle for sensing a rotational speed of the wheel, the wheel speed sensor being connected to the controller so it can provide the controller with an output signal indicative of the sensed rotational speed of the wheel, wherein the controller is programmed to use the output signal from the wheel speed sensor to operate at least one vehicle brake momentarily to apply a low level braking force pulse or plurality of low level braking force pulses to the vehicle when the speed of the vehicle reaches a predetermined level after engagement of the reverse gear.

15. A control apparatus according to any one of claims 10 to 14 further including a wheel speed sensor mountable on or near a wheel of the vehicle for sensing a rotational speed of the wheel, the wheel speed sensor being connected to the controller so it can provide the controller with an output signal indicative of the sensed rotational speed of the wheel, a load sensor for sensing any additional load supported by the vehicle, the load sensor being connected to the controller so that it can provide the controller with an output signal indicative of the load, wherein the controller is programmed such that the speed control procedure comprises using the output signal from the wheel speed sensor and the output signal from the load sensor to calculate the braking force required to bring the vehicle to a stop within a predetermined distance from the object and transmitting a signal to a braking device so as to ensure that the braking device applies the calculated braking force to one or more wheels of the vehicle.

16. A vehicle comprising a control apparatus according to any one of claims 10 to 15.

REAR of Vehicle

FRONT of Vehicle

Figure 1

Signal from reversing light? — No / Yes

Is speed >5 km/h? — No / Yes

Power up distance sensor

Pulse brakes

Signal from distance sensor? — No / Yes

Carry out speed control procedure

Signal from reversing light? — No / Yes

Is speed <5 km/h? — No / Yes

Power down distance sensor

Figure 2

Signal from
reversing light? ──No──►

Power down distance
sensor

Yes ◄── No

Is speed
>5 km/h?

Yes

Power up distance sensor

Pulse brakes

Signal from
distance
sensor? ──No──►

Signal from
reversing
light? ──Yes──►

No
t=0

Yes

Speed <5
km/h? ──Yes──►

No

Signal from
distance
sensor? ──Yes──►

No
t = t+1

Carry out speed control procedure

t > t₁? ──No──►

Yes

Figure 3

## Figure 4

```
                                    ┌─────────────────────┐
                                    │  Obtain output of    │
                                    │  wheel speed from    │
                                    │  one or more wheel   │
                                    │  speed sensors       │
                                    └─────────────────────┘
                                              │
                                              ▼
            ┌─────────────────────────────────────────────┐
            │          Is any braking force being          │
      NO    │          caused to be applied by             │
            │                 driver?                      │
            └─────────────────────────────────────────────┘
                                              │
                                             YES
                                              │
                                              ▼
                        ┌─────────────────────────────┐
                        │  Is braking force substantial│
                        │  enough to reduce speed of   │
                        │  vehicle so that the vehicle │
                        │  does not collide with       │
                        │  object?                     │
                        └─────────────────────────────┘
                             │                    │
                            YES                   NO
```

| Calculate braking force required to reduce speed of the vehicle so that the vehicle does not collide with object | No further action to be taken | Calculate additional braking force required to reduce speed of the vehicle so that the vehicle does not collide with object |

Apply calculated braking force to one or more wheels of the vehicle

EP 2 799 296 A1

Haptic trigger speed     Braking trigger distance

Reversing signal

Dock proximity signal

Vehicle speed

Haptic confirmation

Brake pressure

time

Figure 5

Figure 6

**Europäisches Patentamt**
**European Patent Office**
**Office européen des brevets**

# EUROPEAN SEARCH REPORT

**Application Number**

EP 14 16 5673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2005 036794 A1 (DAIMLER CHRYSLER AG [DE]) 8 February 2007 (2007-02-08) * paragraph [0007] - paragraph [0008] * ----- | 1,10,16 | INV. B60T7/22 |
| A | DE 10 2008 018783 A1 (MAN NUTZFAHRZEUGE AG [DE]) 5 November 2009 (2009-11-05) * paragraph [0031] * ----- | 1,10,16 | |
| A | WO 2004/055611 A1 (DAIMLER CHRYSLER AG [DE]; GEHRING OTTMAR [DE]; HAEMMERLING CARSTEN [DE] 1 July 2004 (2004-07-01) * the whole document * ----- | 1,10,16 | |

**TECHNICAL FIELDS SEARCHED (IPC)**

B60T
B60W

The present search report has been drawn up for all claims

| Place of search | Date of completion of the search | Examiner |
|---|---|---|
| Munich | 18 September 2014 | Colonna, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 5673

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2014

| Patent document cited in search report | Publication date | Patent family member(s) | Publication date |
|---|---|---|---|
| DE 102005036794 A1 | 08-02-2007 | NONE | |
| DE 102008018783 A1 | 05-11-2009 | NONE | |
| WO 2004055611 A1 | 01-07-2004 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6604592 B
- US 3898652 A
- US 4574908 A
- GB 2458655 A